Europäisches Patentamt

European Patent Office

Office européen des brevets

(19)

(11) **EP 1 365 596 A2**

(12) **EUROPEAN PATENT APPLICATION**

(43) Date of publication:
**26.11.2003 Bulletin 2003/48**

(51) Int Cl.[7]: **H04N 7/50**, H04N 7/30

(21) Application number: **03252690.7**

(22) Date of filing: **29.04.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | (72) Inventor: **Kitamura, Takuya, Sony Corporation Tokyo (KP)** |
| (30) Priority: **30.04.2002 JP 2002128886** | (74) Representative: **DeVile, Jonathan Mark, Dr. et al**<br>**D. Young & Co**<br>**21 New Fetter Lane**<br>**London EC4A 1DA (GB)** |
| (71) Applicant: **SONY CORPORATION**<br>**Tokyo 141 (JP)** | |

(54) **Image processing method and apparatus**

(57)    An image processing apparatus is provided which can reduce an amount of data representing an image, whilst avoiding a negative effect on the image quality. The image processing apparatus comprises a square circuit, an addition circuit, a register and a shift circuit which are arranged to calculate a root-mean-square value of pixel data. Also, a square of a mean of the pixel data is calculated by the addition circuit, the register, the shift circuit and the square circuit. Then, by a subtraction circuit, a difference between the root-mean-square value of the pixel data and the square of a mean of the pixel data is calculated. The value is applied for generation of activity data indicating complexity of the image.

FIG. 1

121

EP 1 365 596 A2

**Description**

BACKGROUND OF THE INVENTION

1. Field of the Invention

The present invention relates to image processing apparatus and methods of image processing.

2. Description of the related art

It is known that, in compression processing of image data, an effective coding can be realized by utilizing, for example, local information in the image.

An image has a nature that, even if the coding is carried out for a complicated part in the image with rougher quantization than the other part, deterioration of the image quality thereof may not be recognized with the naked eye of human.

Therefore, in an image processing apparatus, an image is divided into plural parts, each in which complexity of the image is detected and on the basis of the detection result, by quantizing a part of the complex image roughly and quantizing the other part finely, a data amount is reduced with avoiding a negative effect on the image quality.

Such information as complexity of an image is called as activity.

In an image processing apparatus, activity of the image data intended for quantization is calculated and on the basis of the activity, a quantization-scale of the quantization is determined.

However, a related image processing apparatus cannot calculate activity with a high-speed operation, thus applies mean activity of a last frame image as mean activity of a frame image intended for quantization.

Therefore, in the related image processing apparatus, there is a disadvantage that an effect to reduce a data amount with avoiding a negative effect on the image quality does not fully work.

Also, in the related image processing apparatus, there is a disadvantage that a circuit for calculating activity becomes large-scale.

Particularly, in case of calculating activity of field image data, since a memory access is frequently required, a memory with a wide bandwidth is needed and thus the apparatus becomes large-scale.

SUMMARY OF THE INVENTIONS

Various aspects and features of the present invention are defined in appended claims.

Embodiments of the present invention relate to an image processing apparatus and methods for performing a predetermined operation to determine quantization-scale used for quantization of image data or the like.

The present invention is made in consideration of the above situation. Embodiments of the present invention can provide an image processing method and apparatus thereof, which can reduce an image data amount with avoiding a negative effect on the image quality.

Also, embodiments of the present invention can provide an image processing method and apparatus thereof, which can generate data intended for an index of image complexity with a small-scale constitution and a high-speed operation.

To achieve the above objects, a first invention is an image processing apparatus which calculates a root-mean-square value of a difference between respective plural pixel values forming the image and a mean of said plural pixel values, and the root-mean-square value is applied to determine complexity of the image, and the apparatus comprises a first arithmetic circuit for calculating a mean of the sum of square of the plural pixel values inputted consecutively, a second arithmetic circuit, provided in parallel with the first arithmetic circuit, for calculating a square of a mean of the plural pixel values, and a third arithmetic circuit for calculating a difference, as the root-mean-square value, between the calculation result in the first arithmetic circuit and the calculation result in the second arithmetic circuit.

Operations in the image processing apparatus according to the first invention are the following.

The first arithmetic circuit calculates a mean of the sum of square of the plural pixel values inputted consecutively.

Then, the second arithmetic circuit calculates a square of a mean of the plural pixel values inputted consecutively, simultaneously with the first arithmetic circuit.

Further, the third arithmetic circuit calculates a root-mean-square value that is a difference between the calculation result in the first arithmetic circuit and the calculation result in the second arithmetic circuit.

An image processing apparatus according to a second invention which calculates a root-mean-square value of a difference between respective plural pixel values forming the image and a mean of the plural pixel values, and the root-mean-square is applied to determine complexity of the image, and the apparatus comprises a first arithmetic circuit for squaring the plural pixel values inputted consecutively, a first accumulation circuit for calculating an accumulated value of an operation result in the first arithmetic circuit, a first processing circuit for operating processing equivalent to a division of the accumulated value calculated in the first accumulation circuit by a number of the plural pixel values, a second accumulation circuit for calculating an accumulated value of the plural pixel values inputted consecutively, a second processing circuit for operating processing equivalent to a division of the accumulated value calculated in the second accumulation circuit by a number of the plural pixel values, a second arithmetic circuit for squaring the processing result in the second processing circuit and a third arithmetic circuit for calculating a difference, as the root-mean-square value, between the processing result in the first processing circuit and the operation result in the second arithmetic circuit.

An image processing apparatus according to a third invention is the apparatus comprising a root-mean-square value calculation circuit for calculating a root-mean-square value of a difference between respective plural pixel values forming an image and a mean of the plural pixel values, a data generation circuit for generating index data as an index of complexity of the frame image, by using a minimum the root-mean-square value among the root-mean-square values calculated for the respective plural modules and a mean of plural the root-mean-square values calculated for a frame image before the frame image, a determination circuit for determining a quantization-scale to quantizes the image on the basis of the index data and a quantization circuit for quantizing the image with the quantization-scale, and the root-mean-square value calculation circuit comprises a first arithmetic circuit for calculating a mean of the sum of square of the plural pixel values inputted consecutively a second arithmetic circuit, provided in parallel with the first arithmetic circuit, for calculating a square of a mean of said plural pixel values and a third arithmetic circuit for calculating a difference, as the root-mean-square value, between a calculation result in the first arithmetic circuit and a calculation result in the second arithmetic circuit.

An image processing apparatus according to a fourth invention which calculates for respective plural modules when a frame image is processed by being divided into the plural modules, a root-mean-square value of a difference between respective plural pixel values forming the module and a mean of the plural pixel values forming the module, and the root-mean-square is applied to determine complexity of the frame image formed by a first field image and a second field image, and the apparatus comprises a first arithmetic circuit for inputting in order plural pixel values forming the first field image and plural pixel values forming the second field image consecutively and squaring the inputted plural pixel values, a first accumulation circuit comprising plural first memory circuits provided correspondingly to the respective plural modules, which writes an accumulated value of the operation result in the first arithmetic circuit into the first memory circuit corresponding to the module in which the pixel value applied for the operation in the first arithmetic circuit is included, a first processing circuit for operating processing equivalent to a division of the accumulated value calculated in the first accumulation circuit by a number of pixels forming the module, a second accumulation circuit comprising plural second memory circuits provided correspondingly to the respective plural modules, which writes an accumulated value of the inputted plural pixel values to the second memory circuit corresponding to the module in which the pixel value is included, a second processing circuit for operating processing equivalent to a division of the accumulated value calculated in the second accumulation circuit by a number of pixels forming the module, a second arithmetic circuit for squaring the processing result in the second processing circuit and a third arithmetic circuit for calculating a difference, as the root-mean-square value, between the processing result in the first processing circuit and the operation result in the second arithmetic circuit.

Operations in the image processing apparatus according to the fourth invention are the following.

The first arithmetic circuit consecutively inputs in order plural pixel values forming the first field image and plural pixel values forming the second field image and squares the inputted plural pixel values.

And, the first accumulation circuit writes an accumulated value of the operation result in the first arithmetic circuit into, among plural memory circuits, the first memory circuit corresponding to the module in which the pixel value applied for the operation in the first arithmetic circuit is included.

Then, the first processing circuit operates processing equivalent to a division of the accumulated value calculated in the first accumulation circuit by a number of the plural pixel values.

Further, the following operations are performed simultaneously with the above-mentioned operations.

The second accumulation circuit writes an accumulated value of the inputted plural pixel values into, among plural second memory circuits, the second memory circuit corresponding to the module in which the pixel value is included.

And, the second processing circuit operates processing equivalent to a division of the accumulated value calculated in the second accumulation circuit by a number of pixels forming the module.

Then, the second arithmetic circuit squares the processing result in the second processing circuit.

And, the third arithmetic circuit calculates a difference, as the root-mean-square value, between the processing result in the first processing circuit and the operation result in the second arithmetic circuit.

An image processing apparatus according to a fifth invention is the apparatus which calculates for respective plural modules when a frame image is processed by being divided into the plural modules, a root-mean-square value of a difference between respective plural pixel values forming the module and a mean of the plural pixel values forming the module, and the root-mean-square value is applied to determine complexity of the frame image formed by a first field image and a second field image, and the apparatus comprises a first arithmetic circuit for inputting in order plural pixel values forming the first field image and plural pixel values forming the second field image consecutively and squaring the inputted plural pixel values, a first addition circuit for adding a first feedback value and the operation result in the first arithmetic circuit, plural first memory circuits provided correspondingly to the respective the plural modules, a first selection circuit for selecting the first memory circuit so that the addition result in the first addition circuit is written into the first memory circuit corresponding to the module applied for the addition in the first addition circuit, a second selection circuit for selecting the first memory circuit so that the first feedback value is read out from the first memory circuit corresponding to the module applied for the addition in the first addition circuit, a first processing circuit for operating processing equivalent to a division of the first feedback value by a number of the plural pixels forming the module, after the addition result in the first addition circuit is written into the first memory circuit for all pixel forming the module, a second addition circuit for adding the inputted plural pixel values and a second feedback value, plural second memory circuits provided correspondingly to the respective the plural modules, a third selection circuit for selecting the second memory circuit so that the addition result in the second addition circuit is written into the second memory circuit corresponding to the module applied for the addition in the second addition circuit, a fourth selection circuit for selecting the second memory circuit so that the second feedback value is read out from the second memory circuit corresponding to the module applied for the addition in the second addition circuit, a second processing circuit for operating processing equivalent to a division of the second feedback value by a number of the plural pixels forming the module, after the addition result in the second addition circuit is written into the second memory circuit for all pixel forming the module, a second arithmetic circuit for squaring the processing result in the second processing circuit and a third arithmetic circuit for calculating a difference, as the root-mean-square value, between the calculation result in the first arithmetic circuit and the calculation result in the second arithmetic circuit.

An image processing method according to a sixth invention is the method wherein an image processing apparatus calculates a root-mean-square value of a difference between respective plural pixel values forming the image and a mean of the plural pixel values, and the root-mean-square is applied to determine complexity of an image, and the image processing apparatus comprises a first step for calculating a mean of the sum of square of the plural pixel data inputted consecutively, a second step for calculating a square of a mean of the plural pixel values inputted consecutively, simultaneously with the first step and a third step for calculating a difference, as the root-mean-square value, between the calculation result in the first step and the calculation result in the second step.

An image processing method according to a seventh invention is the method wherein an image processing apparatus, when a frame image is processed by being divided into plural modules, calculates for the respective plural modules, a root-mean-square value of a difference between respective plural pixel values forming the module and a mean of the plural pixel values forming the module, and the root-mean-square is applied to determine complexity of the frame image formed by a first field image and a second field image, and the image processing apparatus comprises a first step for inputting in order plural pixel values forming the first field image and plural pixel values forming the second field image consecutively and squaring the inputted plural pixel values, a second step for writing an accumulated value of the operation result in the first arithmetic circuit into, among plural first memory circuits, the first memory circuit corresponding to the module in which the pixel value applied for the operation in the first step is included, a third step for operating processing equivalent to a division of the accumulated value calculated in the second step by a number of pixels forming the module, a fourth step for writing an accumulated value of the inputted plural pixel values into, among plural second memory circuits, the second memory circuit corresponding to the module in which the pixel value is included, a fifth step for operating processing equivalent to a division of the accumulated value calculated in the fourth step by a number of pixels forming the module, a sixth step for squaring the processing result in the fifth step and a seventh step for calculating a difference, as the root-mean-square value, between the processing result in the third step, and further, the operation result in the fifth step, and the first, second and third step are operated simultaneously with the fourth, fifth and sixth step.

BRIEF DESCRIPTION OF THE DRAWINGS

The invention will now be described by way of example with reference to the accompanying drawings, throughout which like parts are referred to by like references, and in which:

FIG.1 is a view for describing a related image processing apparatus;
FIG.2 is a view showing a whole constitution of an image processing apparatus in a second embodiment according to the present invention;
FIG.3 is a constitution view of an activity arithmetic circuit in FIG.2;
FIG.4 is a circuit diagram of a var_sblk arithmetic circuit shown in FIG.3;

FIG.5 is a view for describing an activity arithmetic circuit in a third embodiment according to the present invention;
FIG.6 is a circuit diagram of a var_sblk arithmetic circuit shown in FIG.5; and
FIG.7 is a view for describing an usage of registers in the var_sblk arithmetic circuit shown in FIG.6.

DESCRIPTION OF THE PREFERRED EMBODIMENTS

1. <u>First embodiment</u>

Hereinafter, a first embodiment will be described as a basis of a second and a third embodiment.

In TM (Test Mode) 5 known as an encoder model of MPEG, activity is calculated as followings.

First, for respective four sub-blocks of 8 pixels x 8 lines available by dividing brightness elements in a 16 pixels x 16 lines macro-block of a frame image in a video signal, the respective data var_sblk shown in the following equation (1), which is a sum of square of a difference of the pixel data of the respective pixels and their mean value, is calculated. In the calculation, the more complicated the image is, the greater the value of data var_sblk becomes.

$$vbar\_sblk = \frac{1}{64}\underset{k=1}{\overset{64}{sum}}(P_k - P\_mean)^2 \qquad \cdots (1)$$

Further, a mean value of a pixel data in the above equation (1) is calculated by the following equation (2).

$$P\_mean = \frac{1}{64}\underset{k=1}{\overset{64}{sum}}P_k \qquad \cdots (2)$$

And, as shown in the following equation (3), by using a minimum value of the data var_sblk calculated for the four sub-blocks, data actj is calculated.

$$act_j = 1 + \underset{sblk=1.4}{\min}(\text{var}\_sblk) \qquad \cdots (3)$$

Then, as shown in the following equation (4), by using mean value data of the data actj and a data actj calculated for a previous frame image, the data actj will be normalized to calculate activity data N_actj.

$$N\_act_j = \frac{2^*act_j + avg\_act}{act_j + 2^*avg\_act} \qquad (4)$$

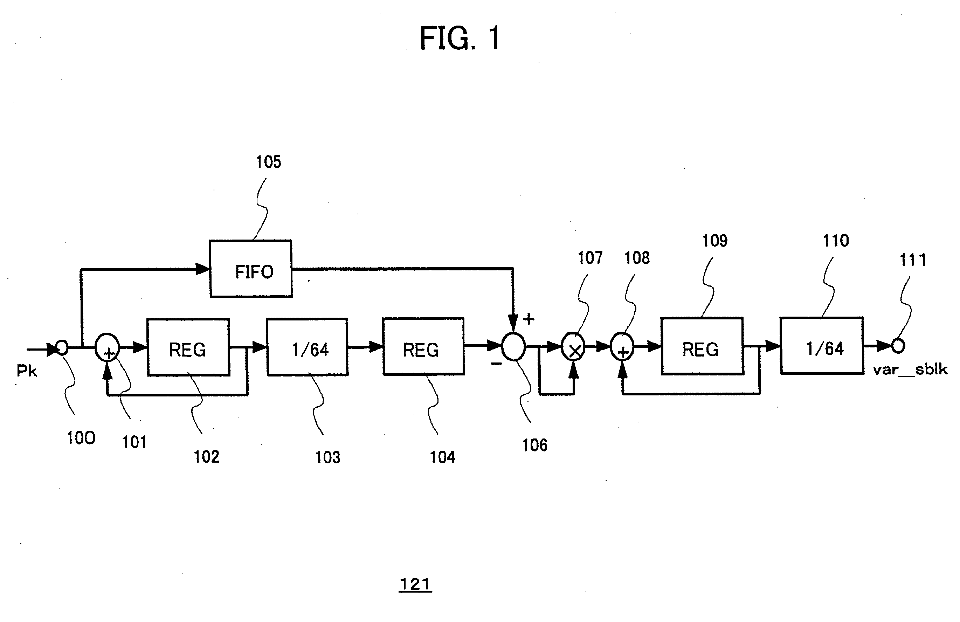

The calculations in the above equations (1), (2), for example, are performed with an image processing apparatus 121 shown in FIG.1.

The image processing apparatus 121 comprises an input terminal 100, an addition circuit 101, a register 102, shift circuit 103, a register 104, a FIFO (First In First Out) circuit 105, a subtraction circuit 106, a square circuit 107, an addition circuit 108, a register 109, a shift circuit 110 and an output terminal 111.

In the image processing apparatus 121, pixel data in a sub-block is inputted in order from the input terminal 100.

Then, the inputted pixel data and pixel data given feedback from the register 102 are added in the addition circuit 101, and by outputting the addition result to the shift circuit 103 via the register 102, a mean value P_mean of the pixel data in the sub-block will be stored in the register 104 when finishing processing for one sub-block pixel data.

In parallel with the above operations, via the FIFO circuit 105, a pixel data Pk in the sub-block is outputted to the subtraction circuit 106.

Then, in the subtraction circuit 106, the mean value inputted to the register 104 is subtracted from the pixel data Pk and the subtraction result will be squared by the square circuit 107 to generate data $(Pk-P\_mean)^2$.

In this case, k is an integer ranging from 1 to 64.

Further, by the subtraction circuit 106 and the register 109, $(Pk-P\_mean)^2$ for all pixel data Pk in the sub-block are added, then, the addition result is shifted to the LSB by 6 bits in the shift circuit 110 and thus the data var_sblk will be outputted to the output terminal 111.

However, since the equation (1) includes a mean value P_mean calculated by the equation (2), the above-mentioned image processing apparatus 121 shown in FIG.1 requires the FIFO circuit 105 that holds pixel data Pk inputted from the input terminal 100 until the mean value P_mean is stored into the register 104, and consequently there is a disadvantage that it becomes large-scale. Also, since an operation of the root-mean-square in the later stage is performed after calculating the mean value P_mean, a period for the activity processing becomes long.

As an operation method other than the above (1), (2), for example, there is a method in which, pixel data Pk forming a sub-block stored in a predetermined memory is read out to calculate a mean value P_mean, the same is written to the memory, then, pixel data Pk are read out consecutively to calculate a difference with the mean value P_mean and to calculate a sum of square of the difference.

However, in this method, since an access to the memory is frequently required and a memory with a wide bandwidth is needed, as a result, an image processing apparatus becomes large-scale. Also, with the operation in the method, since root-mean-square processing is operated after a mean value P_mean is calculated, a period for the activity processing becomes long.

Due to the above situation, a related image processing apparatus applies activity of a last frame image, as activity of a frame image intended for quantization

Therefore, according to the related image processing apparatus, there is a disadvantage that an effect to reduce a data amount with avoiding a negative effect on the image quality does not fully work.

The following second and third embodiment correspond to the present invention to solve the above disadvantage in the first embodiment.

2. Second embodiment

The present embodiment corresponds to a first, second, third and sixth invention.

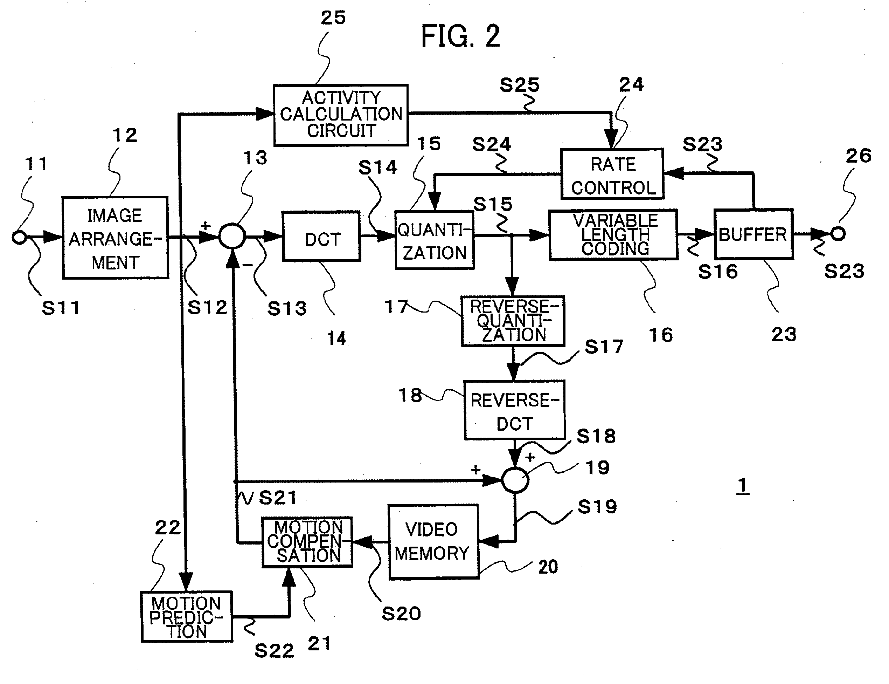

FIG.2 is a whole constitution view of an image processing apparatus 1 in the present embodiment.

As shown in FIG.2, the image processing apparatus 1 comprises, for example, a video input terminal 11, an image-arrangement circuit 12, an arithmetic circuit 13, a DCT (Discrete Cosine Transfer) arithmetic circuit 14, a quantization circuit 15, a variable length coding circuit 16, a reverse-quantization circuit 17, a reverse-DCT circuit 18, an arithmetic circuit 19, a video memory 20, a motion compensation circuit 21, a motion prediction circuit 22, a buffer 23, a rate control circuit 24, an activity arithmetic circuit 25 and a video output terminal 26.

The image processing apparatus 1 comprises a feature in a constitution in the activity arithmetic circuit 25, specifically an arithmetic circuit for data var_sblk.

According to the image processing apparatus 1, it is possible to generate activity data S25 in the activity arithmetic circuit 25 in a short period and with a small-scale constitution, and also possible in the quantization circuit 15 to quantize by using quantization-scale S24 generated from activity data available for a frame image intended for quantization.

Therefore, it is possible to generate bit-stream data S23 with high compression efficiency and the image quality.

In addition, the activity arithmetic circuit 25 corresponds to the data generation circuit in the third invention, the rate control circuit 24 corresponds to the determination circuit in the third invention and the quantization circuit 15 corresponds to the quantization circuit in the third invention.

Hereinafter, each constitution element in the image processing apparatus 1 will be described.

The video input terminal 11 inputs a video signal S11 that is formed by a brightness signal Y and color different signals Pb, Pr.

The image-arrangement circuit 12 outputs a video signal S12 available by arranging, in a sequential order of coding, the frame image in the video signal S11 in response to the picture type I, P, B, to the arithmetic circuit 13, the motion prediction circuit 22 and the activity arithmetic circuit 25.

The arithmetic circuit 13 generates a differential image signal S13 indicating a difference between a frame image signal of a video signal S11 and a predicted image signal which is inputted from the motion compensation circuit 21 and outputs the same to the DCT arithmetic circuit 14.

The DCT arithmetic circuit 14 converts the differential image signal S13 to a DCT factor signal S14 and outputs the same to the quantization circuit 15.

The quantization circuit 15 quantizes the DCT factor signal S14 with a quantization-scale S24 which is inputted from the rate control circuit 24, generates data S15 and outputs the same to the variable length coding circuit 16 and the reverse-quantization circuit 17.

The variable length coding circuit 16 operates a variable length coding for the data S15 to generate data S16 and outputs the same to the buffer 24.

The reverse-quantization circuit 17 reverse-quantizes the data S15 from the quantization circuit 15, generates a signal S17 and outputs the same to the reverse-DCT circuit 18.

The reverse-DCT circuit 18 performs a reverse-DCT operation for the data S17 to generate a video signal S18 and outputs the same to the arithmetic circuit 19.

The arithmetic circuit 19 adds the video signal S17 from the reverse-quantization circuit 17 and a predicted image signal S21 from the motion compensation circuit 21 to generate an image signal S19 and outputs the same to the video memory 20.

The video memory 20 memorizes the image signal S19, read out the same to output to the motion compensation circuit 21 as an image signal S20.

The motion compensation circuit 21 generates the motion compensation signal 21 on the basis of a motion vector signal S22 from the motion prediction circuit 22 and outputs the same to the arithmetic circuit 13.

The motion compensation circuit 21 does not output the predicted image signal S21 when the frame image of the video signal S12 is I-picture. That is, the arithmetic circuit 13 outputs a frame image of an I-picture in the video signal S12 which is inputted from the image-arrangement circuit 12 to the DCT arithmetic circuit 14 as it is.

Meanwhile, when the frame image of the video signal S12 is P-picture or B-picture, the motion compensation circuit 21 generates the predicted image signal S21 by using a motion vector signal S22 from the motion prediction circuit 22 and I-picture or P-picture image read out from the video memory 20, and outputs the same to the arithmetic circuit 13.

The motion prediction circuit 22, on the basis of the frame image of the video signal S12, generates the motion vector signal S22 and outputs the same to the motion compensation circuit 21.

The buffer 23 memorizes the data S16 from the variable length coding circuit 16 and output the same to the video output terminal 26 as bit-stream data (compressed coded data) S23 corresponding to a target bit-rate.

The rate control circuit 24 generates a quantization-scale on the basis of the bit-stream data S23 from the buffer 23, multiplies the quantization-scale by the activity data S25 from the activity arithmetic circuit 25, generates quantization-scale S24 and outputs the same to the quantization circuit 15.

The activity arithmetic circuit 25, on the basis of the video signal S12, generates the activity data (Index data in the present) S25 indicating complexity of a frame image intended for coding and quantization, and outputs the same to the rate control circuit 24.

The image processing apparatus 1 has a feature in the activity arithmetic circuit 25 and, on the basis of the activity data S25 generated by the activity arithmetic circuit 25, the quantization-scale S24 is generated in the rate control circuit 24, then by the rate control circuit 24 a bit-rate of the bit-stream data S23 and the image quality are controlled.

Hereinafter, the activity arithmetic circuit 25 shown in Fig.2 will be described in detail.

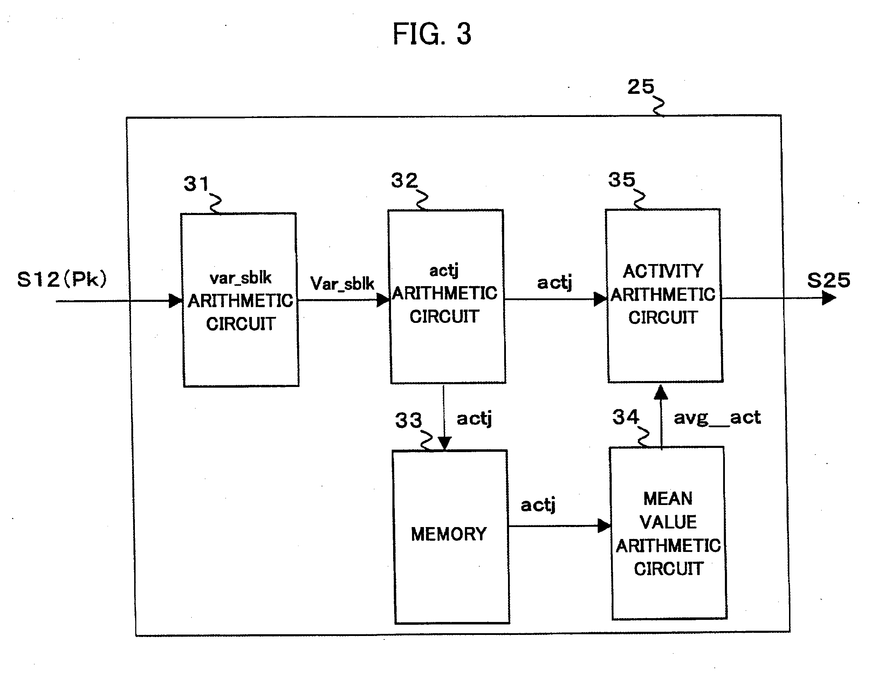

Fig.3 is a constitution view for the activity arithmetic circuit 25 shown in Fig.2.

As shown in Fig.3, the activity arithmetic circuit 25 has, for example, a var_sblk arithmetic circuit 31, an actj arithmetic circuit 32, a memory 33 and a mean value arithmetic circuit 34.

The var_sblk arithmetic circuit 31 calculates data var_sblk shown in the following equation (5) for the respective four sub-blocks of 8 pixels x 8 lines available by dividing brightness elements of a 16 pixels x 16 lines macro-block of a frame image in a video signal. In the calculation, the more complicated the image is, the greater the value of data var_sblk becomes.

$$\mathrm{var\_}sblk = \frac{1}{64}\,\underset{k=1}{\overset{64}{sum}}\,P_k^2 - \left(\frac{1}{64}\,\underset{k=1}{\overset{64}{sum}}\,P_k\right)^2 \qquad \cdots (5)$$

The above equation (5) is given by transforming the equation (1) as shown by the following equations (6), (7), (8).

That is, the equation (1) can be transformed by steps in the following equation (6).

$$\begin{aligned} \mathrm{var\_}sblk &= \frac{1}{64}\overset{64}{\underset{k=1}{sum}}\left(P_k - P\_mean\right)^2 \\ &= \frac{1}{64}\overset{64}{\underset{k=1}{sum}}\left(P_k^2 - 2*P_k*P\_mean + P\_mean^2\right) \\ &= \frac{1}{64}\overset{64}{\underset{k=1}{sum}}P_k^2 - \frac{1}{64}\overset{64}{\underset{k=1}{sum}}\left(2*P_k*P\_mean\right) + \frac{1}{64}\overset{64}{\underset{k=1}{sum}}P\_mean^2 \\ &= \frac{1}{64}\overset{64}{\underset{k=1}{sum}}P_k^2 - \frac{2}{64}*P\_mean*\overset{64}{\underset{k=1}{sum}}P_k + \frac{1}{64}*P\_mean^2*\overset{64}{\underset{k=1}{sum}}1 \end{aligned}$$

$$\cdots (6)$$

Data P_mean in the above equation (6) is shown by the following equation (7).

$$P\_mean = \frac{1}{64}\overset{64}{\underset{k=1}{sum}}P_k \qquad\qquad \cdots (7)$$

When transforming after the equation (7) is substituted for the equation (6), the equation (5) is given as shown in the following equation (8).

$$\begin{aligned} \mathrm{var\_}sblk &= \frac{1}{64}\overset{64}{\underset{k=1}{sum}}P_k^2 - \frac{2}{64}*P\_mean*\overset{64}{\underset{k=1}{sum}}P_k + \frac{1}{64}*P\_mean^2*\overset{64}{\underset{k=1}{sum}}1 \\ &= \frac{1}{64}\overset{64}{\underset{k=1}{sum}}P_k^2 - \frac{2}{64}*\frac{1}{64}\overset{64}{\underset{k=1}{sum}}P_k*\overset{64}{\underset{k=1}{sum}}P_k + \frac{1}{64}*\frac{1}{64}*\overset{64}{\underset{k=1}{sum}}P_k*\frac{1}{64}*\overset{64}{\underset{k=1}{sum}}P_k*64 \\ &= \frac{1}{64}\overset{64}{\underset{k=1}{sum}}P_k^2 - \left(\frac{1}{64}\overset{64}{\underset{k=1}{sum}}P_k\right)^2 \end{aligned}$$

$$\cdots (8)$$

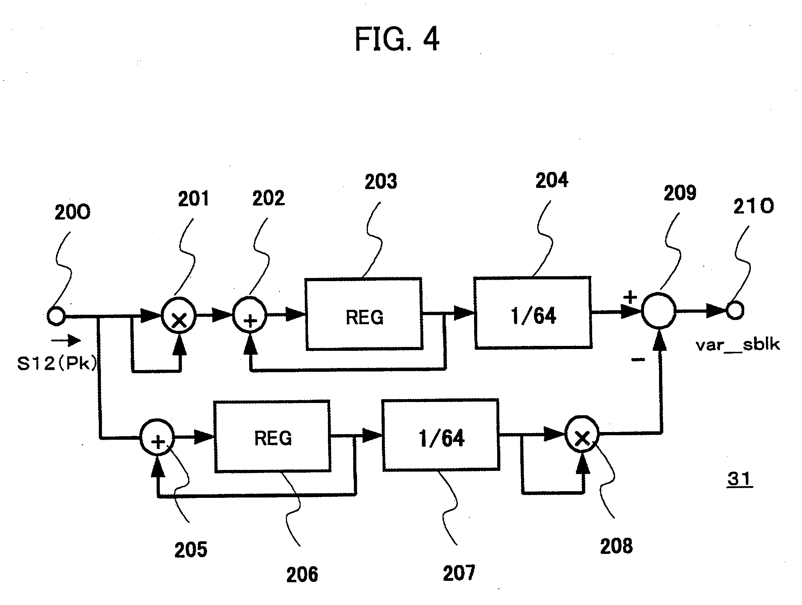

FIG.4 is a circuit diagram of the var_sblk arithmetic circuit 31.
As shown in FIG.4, the var_sblk arithmetic circuit 31 comprises, for example, an input terminal 200, a square circuit 201, an addition circuit 202, a register 203, a shift circuit 204, an addition circuit 205, a register 206, a shift circuit 207, a square circuit 208, a subtraction circuit 209 and an output circuit 210.
The var_sblk arithmetic circuit 31 corresponds to an image processing apparatus according to the first and second invention, and the root-mean-square arithmetic circuit in the third invention.
Also, the square circuit 201, the addition circuit 202, the register 203 and the shift circuit 204 correspond to the first arithmetic circuit in the first invention, the addition circuit 205, the register 206, the shift circuit 207, and the square circuit 208 correspond to the second arithmetic circuit in the first invention and the subtraction circuit 209 corresponds to the third arithmetic circuit in the second invention.
The input terminal 200 inputs a video signal S12 form an image-arrangement circuit 12 shown in FIG.2.
The video signal S12 has consecutive image data Pk for respective pixels in a frame image.
The square circuit 201 squares the image data Pk which is inputted from the input terminal 200 to generate $P_k^2$ and outputs the same to the addition circuit 202.
The addition circuit 202 and the register 203 accumulates the data $P_k^2$ corresponding to the 64 pixels in a sub-block which is inputted from the square circuit 201, to generate data sum($P_k^2$) and outputs the same to the shift circuit 204.
The shift circuit 204 shifts the data sum($P_k^2$) which is inputted from the register 203 to the LSB by 6 bits and outputs the operation result of the first term in the above equation (5) to the subtraction circuit 209.

The addition circuit 205 and the register 206 accumulates the data Pk which is inputted from the input terminal 200 to generate the data sum(Pk) and outputs the same to the shift circuit 207.

The shift circuit 207 shifts the data sum(Pk) which is inputted from the register 206 to the LSB by 6 bits to generate data sum(Pk)/64 and outputs the same to the square circuit 208.

The square circuit 208 squares the data sum(Pk)/64 which is inputted from the shift circuit 207 and outputs the result of the second term in the above equation (5) to the subtraction circuit 209.

The subtraction circuit 209 subtracts the result of the second term in the above equation (5) which is inputted from the square circuit 208, from the result of the first term in the above equation (5) which is inputted from the square circuit 204, to generate data var_sblk and outputs the same from the output terminal 210 to an actj arithmetic circuit 32 shown in FIG.3.

Hereinafter, an operation example of the var_sblk arithmetic circuit shown in FIG.4 will be described.

The input terminal 200 inputs a video signal S12 that includes consecutive image data Pk for respective pixels in a frame image.

And, the square circuit 201 squares the image data Pk which is inputted from the input terminal 200 to generate $Pk^2$ and outputs the same to the addition circuit 202.

Then, the addition circuit 202 and the register 203 accumulate the data $Pk^2$ corresponding to the 64 pixels in a sub-block which is inputted from the square circuit 201, to generate data sum($Pk^2$) and output the same to the shift circuit 204.

After, an accumulated result for all 64 pixel data forming a sub-block by the addition circuit 202 and the register 203, is written into the register 203, the shift circuit 204 shifts the data sum($Pk^2$) which is inputted from the register 203 to the LSB by 6 bits and outputs an operation result of the first term in the above equation (5) to the subtraction circuit 209.

Moreover, in parallel with the above-mentioned operations, operations for the addition circuit 205, the register 206, the shift circuit 207 and the square circuit 208 will be performed.

The addition circuit 205 and the register 206 accumulate the data Pk which is inputted from the input terminal 200 to generate the data sum(Pk) and outputs the same to the shift circuit 207.

After, an accumulated result for all 64 pixel data forming a sub-block by the addition circuit 205 and the register 206, is written into the register 206, the shift circuit 207 shifts the data sum(Pk) which is inputted from the register 206 to the LSB by 6 bits to generate data sum(Pk)/64 and outputs the same to the square circuit 208.

Then, the square circuit 208 squares the data sum(Pk)/64 which is inputted from the shift circuit 207 and outputs a result of the second term in the above equation (5) to the subtraction circuit 209.

And, the subtraction circuit 209 subtracts the inputted result of the second term in the above equation (5) from the square circuit 208, from the inputted result of the first term in the above equation (5) from the square circuit 204, to generate data var_sblk and outputs the same to the actj arithmetic circuit 32 shown in FIG.3.

As described above, since the var_sblk arithmetic circuit 31 is constituted as shown in FIG.4 to be adapted for the operation shown in the above equation (5), it can perform the operation for the first term and the second term in the equation (5) in parallel, and thus shorten a loop delay period and accordingly an operation time.

Also, according to the var_sblk arithmetic circuit 31, it simultaneously supplies pixel data to the square circuit 201 for operating the first term in the equation (5) and the addition circuit 205 for operating the second term, and when the pixel data Pk is stored in a predetermined memory, a number of times to access to the memory can be reduced in comparison with the related art and a buffer is not required as opposed to the related art.

Further, since the var_sblk arithmetic circuit 31 applies the register 203 and the register 206 that have an enable function and hold data, the operation-control thereof can be simple.

The actj arithmetic circuit 32 inputs the data var_sblk which the var_sblk arithmetic circuit 31 calculates for the respective four sub-blocks in a frame image, determines, on the basis of the equation (3), a minimum data var_sblk to generate data actj, writes the same to the memory 33 and also outputs the same to the activity arithmetic circuit 35.

The mean value arithmetic circuit 34 calculates a mean value avg_act of the data actj for a previous frame image from the memory 33 and outputs the same to the activity arithmetic circuit 35.

The activity arithmetic circuit 35, by using the mean value avg_act which is inputted from the mean value arithmetic circuit 34, normalizes, on the basis of the equation (4), the data actj which is inputted from the actj arithmetic circuit 32, generates activity data S25 (N_actj) and outputs the same to the rate control circuit 24 shown in FIG.2.

Hereinafter, the operations of the activity arithmetic circuit 25 shown in FIG.3 will be described.

A video signal S12 is inputted from the image-arrangement circuit 12 shown in FIG.2 to the var_sblk arithmetic circuit 31 shown in FIG.3.

Then the var_sblk arithmetic circuit 31 calculates the data var_sblk shown in the equation (5) for the respective four sub-blocks of 8 pixels x 8 lines available by dividing brightness elements of a 16 pixels x 16 lines macro-block in a frame image in a video signal S12, and outputs the same to the actj arithmetic circuit 32.

And, the actj arithmetic circuit 32 inputs the data var_sblk which the var_sblk arithmetic circuit 31 calculates for the respective four sub-blocks in a frame image determines the minimum data var_sblk on the basis of the equation (3), generates data actj, writes the same to the memory 33 and also outputs the same to the activity arithmetic circuit 35.

The mean value arithmetic circuit 34 calculates a mean value avg_act of the data actj for a previous frame image from the memory 33 and outputs the same to the activity arithmetic circuit 35.

The activity arithmetic circuit 35, by using the mean value avg_act which is inputted from the mean value arithmetic circuit 34, normalizes, on the basis of the equation (4), the data actj which is inputted from the actj arithmetic circuit 32, generates activity data S25 (N_actj) and outputs the same to the rate control circuit 24 shown in FIG.2.

Hereinafter, a whole operation in an image processing apparatus shown in FIG.2 will be described.

A video signal S11 which is formed by a brightness signal Y and color different signals Pb, Pr, is inputted to the video input terminal 11.

And, the image-arrangement circuit 12 outputs a video signal S12 available by arranging, in a sequential order of coding, the frame image in the video signal S11 in response to the picture type I, P, B to the arithmetic circuit 13, the motion prediction circuit 22 and the activity arithmetic circuit 25.

Then, as described above, the activity arithmetic circuit 25 generates, on the basis of the video signal S12, the activity data (Index data in the present invention) S25 indicating complexity of a frame image intended for a coding and quantization and outputs the same to the rate control circuit 24.

And, the rate control circuit 24 generates a quantization-scale on the basis of the bit-stream data S23 from the buffer 23 and multiplies the quantization-scale by the activity data S25 from the activity arithmetic circuit 25 to generate quantization-scale S24 and outputs the same to the quantization circuit 15.

And, the arithmetic circuit 13 generates a differential image signal S13 indicating a difference between a frame image signal of a video signal S11 and a predicted image signal which is inputted from the motion compensation circuit 21 and outputs the same to the DCT arithmetic circuit 14.

Then, the DCT arithmetic circuit 14 converts the differential image signal S13 to a DCT factor signal S14 and outputs the same to the quantization circuit 15.

And, the quantization circuit 15 quantizes the DCT factor signal S14 with quantization-scale S24 which is inputted from the rate control circuit 24, generates data S15, then outputs the same to the variable length coding circuit 16 and the reverse-quantization circuit 17.

Then, the variable length coding circuit 16 operates a variable length coding for the data S15 to generate data S16 and outputs the same to the buffer 24.

Moreover, the reverse-quantization circuit 17 reverse-quantizes the data S15 from the quantization circuit 15 to generate a signal S17 and outputs the same to the reverse-DCT circuit 18.

Then, the reverse-DCT circuit 18 performs a reverse-DCT operation for the data S17 to generate a video signal S18 and outputs the same to the arithmetic circuit 19.

And, the arithmetic circuit 19 adds the video signal S17 from the reverse-quantization circuit 17 and a predicted image signal S21 from the motion compensation circuit 21 to generate an image signal S19 and the same will be stored in the video memory 20.

Then, the motion compensation circuit 21 generates the predicted image signal S21 on the basis of a motion vector signal S22 from the motion prediction circuit 22 and outputs the same to the arithmetic circuit 13.

As described above, since the image processing apparatus 1 applies the var_sblk arithmetic circuit 31 of which constitution is shown in FIG.4, it is possible to generate the activity data S25 in the activity arithmetic circuit 25 with a small-scale constitution and in a short period.

Accordingly, in the quantization circuit 15, it is possible to quantize with quantization-scale S24 generated from activity data available for a frame image intended for quantization, and thus possible to generate bit-stream data S23 with high compression efficiency and image quality.

According to the image processing apparatus 1, as described above, it can be constituted on a small-scale as a whole, since the var_sblk arithmetic circuit 31 can be constituted on a small-scale.

Also, according to the image processing apparatus 1, as described above, since a number of accesses to the memory in the var_sblk arithmetic circuit 31 can be reduced, low electric power consumption will be achieved.

3. Third embodiment

The present embodiment corresponds to the fourth, the fifth and the seventh invention.

In the present invention, a case in which a video input terminal 11 in an image processing apparatus shown in FIG.2 inputs a video signal S11 raster-scanned by interlacing, will be described.

In the case, respective frame image data of the video signal S11 is formed by a first field image data and a second field image data.

In the present embodiment, a constitution of a var_sblk arithmetic circuit in an activity arithmetic circuit is different from the constitution in the var_sblk arithmetic circuit 31 shown in FIG.3 described in the second embodiment, and the other constitution is substantially identical to the constitution in the second embodiment.

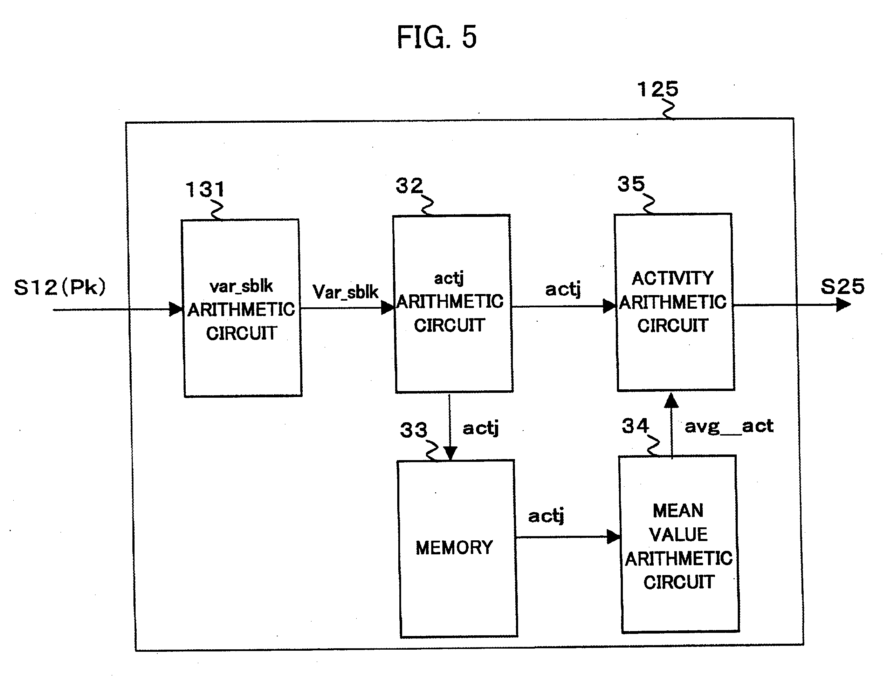

FIG.5 is a constitution view for an activity arithmetic circuit 125 in the present embodiment.

In the present embodiment, for respective sub-blocks of 4 pixels x 4 lines available by dividing brightness elements of a 24 pixels x 12 lines macro-block of a frame image in the video signal S11, data var_sblk shown in the equation (5), which is a sum of square of a difference of the pixel data of the respective pixels and the mean value, is calculated respectively.

In this case, as the sub-block includes 4 pixels x 4 lines for the frame image, it includes 4 pixels x 2 lines for a field image.

In addition, a number of the sub-blocks in a frame image are 18 (=(24*12)/(4*4)).

As shown in FIG.5, the activity arithmetic circuit 125 has, for example, a var_sblk arithmetic circuit 131, an actj arithmetic circuit 32, a memory 32 and a mean-value arithmetic circuit 34.

The actj arithmetic circuit 32, the memory 33 and the mean-value arithmetic circuit 34 are identical to the corresponding circuits described in the second embodiment respectively.

Hereinafter, the var_sblk arithmetic circuit 131 will be described.

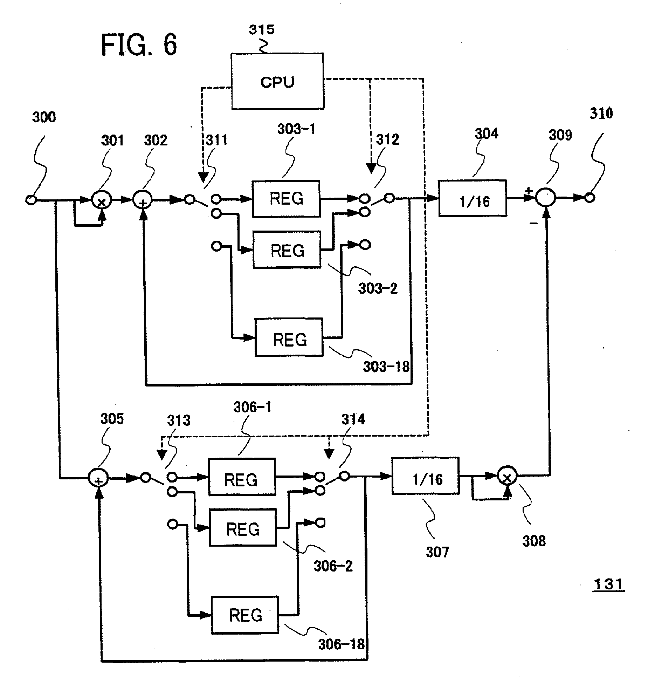

FIG.6 is a constitution view for the var_sblk arithmetic circuit 131 shown in FIG.5.

As shown in FIG.6, the var_sblk arithmetic circuit 131 has, for example, an input terminal 300, a square circuit 301, an addition circuit 302, a switch circuit 311, registers 303-1 to 303-18, a switch circuit 312, a shift circuit 304, an addition circuit 305, a switch circuit 313, registers 306-1 to 306-18, a switch circuit 314, a shift circuit 307, a square circuit 308, a subtraction circuit 309, an output terminal 310 and a control circuit 315.

The input terminal 300 inputs a video signal S12 raster-scanned by interlacing from the image-arrangement circuit 12 shown in FIG.2.

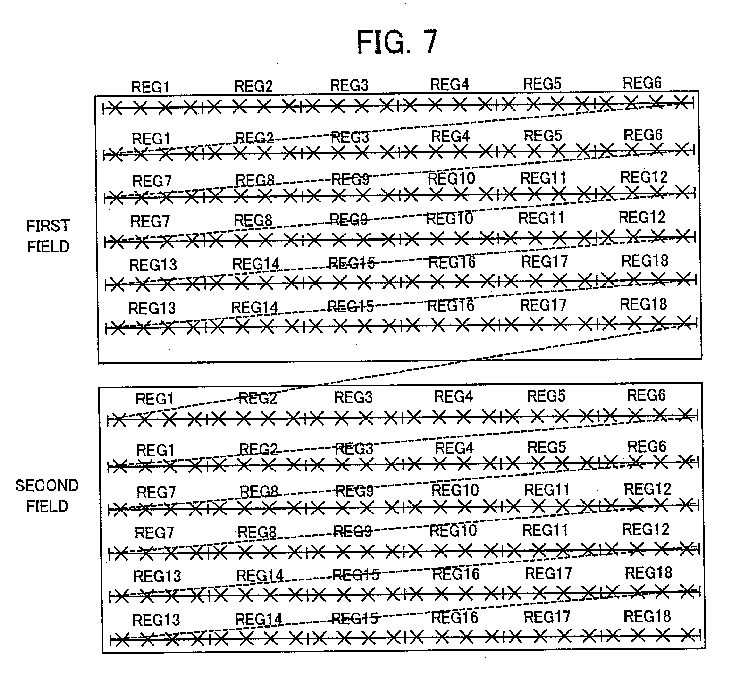

The video signal S12, as shown in FIG.7, is formed by a first field image and a second field image for a respective frame image.

The square circuit 301 generates data $Pk^2$ by squaring pixel data Pk in the video signal S12 which is inputted from the input terminal 300 and outputs the same to the addition circuit 302.

The addition circuit 302 adds the data $Pk^2$ from the square circuit 301 and data from the switch circuit 312, and outputs the result to the switch circuit 311.

And, the switch circuit 311, on the basis of a switch control by the control circuit 315, selects one among the registers 306-1 to 306-18 corresponding to a sub-block in which a pixel corresponding to the data from the addition circuit 302 is included and thus data which is inputted from the addition circuit 302 is written into the selected register.

The registers 303-1 to 303-18 store the respective data corresponding to 18 sub-blocks in a frame image.

The switch circuit 312, on the basis of a switch control by the control circuit 315, selects one among the registers 303-1 to 303-18 corresponding to a sub-block in which data added by the addition circuit 302 is included and thus data read from the selected register is written into the addition circuit 302 and the shift circuit 304.

By the above mentioned operations with the switch circuit 311 and the switch circuit 312, the registers 303-1 to 303-18 store 16 pixels' data $sum(Pk^2)$ which are accumulated for the 1st sub-block to the 18th sub-block respectively.

The shift circuit 304 shifts the data $sum(Pk^2)$ which is inputted from the switch circuit 312 to the LSB by 4 bits and outputs the calculation result in the first term of the equation (5) to the square circuit 309.

The addition circuit 305 adds the data Pk from the input terminal 300 and data from the switch circuit 314, and outputs the result to the switch circuit 313.

The switch circuit 313, on the basis of a switch control by the control circuit 315, selects one among the registers 306-1 to 306-18 corresponding to a sub-block in which a pixel corresponding to the data from the addition circuit 305 is included and thus data which is inputted from the addition circuit 305 is written into the selected register.

The registers 306-1 to 306-18 store the respective data corresponding to 18 sub-blocks in a frame image.

The switch circuit 314, on the basis of a switch control by the control circuit 315, selects one among the registers 306-1 to 306-18 corresponding to a sub-block in which data added by the addition circuit 305 is included and thus data read from the selected register is written into the addition circuit 305 and the shift circuit 307.

By the above mentioned operations with the switch circuit 313 and the switch circuit 314, the registers 306-1 to 306-18 store 16 pixels' data sum(Pk) which are accumulated for the 1st sub-block to the 18th sub-block respectively.

The shift circuit 307 shifts the data sum(Pk) which is inputted from the switch circuit 314 to the LSB by 4 bits and outputs the result to the square circuit 308.

The square circuit 308 squares the data sum(Pk) which is inputted from the shift circuit 307 and outputs a result of the second term in the above equation (5) to the subtraction circuit 309.

The subtraction circuit 309 subtracts the inputted result of the second term in the above equation (5) from the square circuit 308, from the inputted result of the first term in the above equation (5) from the square circuit 304, to generate data var_sblk and outputs the same from the output terminal 310 to an actj arithmetic circuit 32 shown in FIG.5.

Hereinafter, an operation example of the var_sblk arithmetic circuit 131 shown in FIG.6 will be described.

First, the input terminal 300 inputs a video signal S12 raster-scanned by interlacing from the image-arrangement circuit 12 shown in FIG.2.

And, the square circuit 301 generates data $Pk^2$ by squaring pixel data Pk in the video signal S12 which is inputted from the input terminal 300 and outputs the same to the addition circuit 302.

Then, the addition circuit 302 adds the data $Pk^2$ from the square circuit 301 and data from the switch circuit 312, and outputs the result to the switch circuit 311.

And, the switch circuit 311, on the basis of a switch control by the control circuit 315, selects one among the registers 306-1 to 306-18 corresponding to a sub-block in which a pixel corresponding to the data from the addition circuit 302 is included and thus data which is inputted from the addition circuit 302 is written into the selected register.

Moreover, the switch circuit 312, on the basis of a switch control by the control circuit 315, selects one among the registers 303-1 to 303-18 corresponding to a sub-block in which data added by the addition circuit 302 is included and thus data read from the selected register is written into the addition circuit 302 and the shift circuit 304.

By the above mentioned operations with the switch circuit 311 and the switch circuit 312, the registers 303-1 to 303-18 store 16 pixels' data $sum(Pk^2)$ which are accumulated for the 1st sub-block to the 18th sub-block respectively.

The shift circuit 304 shifts the data $sum(Pk^2)$ which is inputted from the switch circuit 312 to the LSB by 4 and outputs the result to the subtraction circuit 309.

Also, in parallel with the above-mentioned operations, following operations are performed.

The addition circuit 305 adds the data Pk from the input terminal 300 and data from the switch circuit 314, and outputs the result to the switch circuit 313.

And, the switch circuit 311, on the basis of a switch control by the control circuit 315, selects one among the registers 306-1 to 306-18 corresponding to a sub-block in which a pixel corresponding to the data from the addition circuit 305 is included and thus data which is inputted from the addition circuit 305 is written into the selected register.

Moreover, the switch circuit 314, on the basis of a switch control by the control circuit 315, selects one among the registers 306-1 to 306-18 corresponding to a sub-block in which data added by the addition circuit 305 is included and thus data read from the selected register is written into the addition circuit 305 and the shift circuit 307.

By the above mentioned operations with the switch circuit 313 and the switch circuit 314, the registers 306-1 to 306-18 store 16 pixels' data sum(Pk) which are accumulated for the 1st sub-block to the 18th sub-block respectively.

And, the shift circuit 307 shifts the data sum(Pk) which is inputted from the switch circuit 314 to the LSB by 4 bits and outputs the result to the square circuit 308.

Then, the square circuit 308 squares the data sum(Pk) which is inputted from the shift circuit 307 and outputs a result of the second term in the above equation (5) to the subtraction circuit 309.

Moreover, the subtraction circuit 309 subtracts the result of the second term in the above equation (5) which is inputted from the square circuit 308, from the result of the first term in the above equation (5) which is inputted from the square circuit 304, to generate data var_sblk and outputs the same from the output terminal 310 to the actj arithmetic circuit 32 shown in FIG.5.

As described above, according to the var_sblk arithmetic circuit 131, before a whole first field image is inputted, it is possible to calculate respective data var_sblk given by the equation (5) for the 1st to the 18th sub-block in parallel.

Therefore, a period for a calculation of activity data in the activity arithmetic circuit 125 can be largely reduced in comparison with the related art, and also numbers to access a memory can be reduced in comparison with the related art, consequently a small-scale apparatus and low electric power consumption thereof can be achieved.

Also, the image processing apparatus according to the present invention can achieve substantially the same effect as the apparatus in the second embodiment.

In the present embodiment data var_sblk for four sub-blocks are applied as an example in calculating a mean value of pixel data, and the other numbers of the sub-blocks may be used in the present invention.

As described above, according to the present invention, it is possible to provide an image processing method and apparatus thereof that can reduce a data amount of an image with avoiding a negative effect on the image quality.

Also, according to the present invention, it is possible to provide an image processing method and apparatus thereof that can generate data intended for an index of image complexity with a small-scale constitution and with a high-speed operation.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

Various respective aspects and features of the invention are defined in the appended claims. Features from the dependent claims may be combined with features of the independent claims as appropriate and not merely as explicitly set out in the claims.

**Claims**

1. An image processing apparatus for calculating a root-mean-square value of a difference between respective plural pixel values for forming said image and a mean of said plural pixel values, and said root-mean-square value being applied for determining complexity of said image, comprising:

   a first arithmetic circuit for calculating a mean of the sum of square of said plural pixel values inputted consecutively;
   a second arithmetic circuit, provided in parallel with said first arithmetic circuit, for calculating a square of a mean of said plural pixel values; and
   a third arithmetic circuit for calculating a difference between the calculation result in said first arithmetic circuit and the calculation result in said second arithmetic circuit, to generate said root-mean-square value.

2. An image processing apparatus as set forth in claim 1, wherein said first arithmetic circuit, said second arithmetic circuit and said third arithmetic circuit process a module as an unit, when a frame image is processed by being divided into said plural modules formed by the respective plural pixel data, and

   said image processing apparatus further comprises a data generation circuit for generating index data as an index of complexity of said frame image, by using a minimum root-mean-square value among said root-mean-square values calculated for the respective plural modules and a mean of plural said root-mean-square values calculated for a previous frame image to said frame image.

3. An image processing apparatus for calculating a root-mean-square value of a difference between respective plural pixel values for forming said image and a mean of said plural pixel values, and said root-mean-square value being applied for determining complexity of said image, comprising:

   a first arithmetic circuit for squaring said plural pixel values inputted consecutively;
   a first accumulation circuit for calculating an accumulated value of an operation result in said first arithmetic circuit;
   a first processing circuit for operating processing equivalent to a division of the accumulated value calculated in said first accumulation circuit by a number of said plural pixel values;
   a second accumulation circuit for calculating an accumulated value of said plural pixel values inputted consecutively;
   a second processing circuit for operating processing equivalent to a division of the accumulated value calculated in the second accumulation circuit by a number of said plural pixel values;
   a second arithmetic circuit for squaring the processing result in the second processing circuit; and
   a third arithmetic circuit for calculating a difference between the calculation result in said first arithmetic circuit and the calculation result in said second arithmetic circuit, to generate said root-mean-square value.

4. An image processing apparatus, comprising:

   a root-mean-square value calculation circuit for calculating a root-mean-square value of a difference between respective plural pixel values forming an image and a mean of said plural pixel values;
   a data generation circuit for generating index data as an index of complexity of said frame image, by using a minimum said root-mean-square value among said root-mean-square values calculated for the respective plural modules and a mean of plural said root-mean-square values calculated for a frame image before said frame image;
   a determination circuit for determining a quantization-scale to quantize said image on the basis of said index data; and
   a quantization circuit for quantizing said image with said quantization-scale, and said root-mean-square value calculation circuit comprises:

      a first arithmetic circuit for calculating a mean of the sum of square of said plural pixel values inputted consecutively;
      a second arithmetic circuit, provided in parallel with said first arithmetic circuit, for calculating a square of a mean of said plural pixel values; and
      a third arithmetic circuit for calculating a difference between the calculation result in said first arithmetic circuit and the calculation result in said second arithmetic circuit, to generate said root-mean-square value.

5. An image processing apparatus for calculating for respective plural modules when a frame image is processed by being divided into said plural modules, a root-mean-square value of a difference between respective plural pixel values for forming the module and a mean of said plural pixel values for forming the module, and said root-mean-square value being applied for determining complexity of the frame image formed by a first field image and a second field image, comprising:

a first arithmetic circuit for inputting in order plural pixel values forming said first field image and plural pixel values forming said second field image consecutively and squaring the inputted plural pixel values;
a first accumulation circuit comprising plural first memory circuits provided correspondingly to the respective plural modules, which writes an accumulated value of the operation result in said first arithmetic circuit into said first memory circuit corresponding to the module in which the pixel value applied for the operation in the first arithmetic circuit is included;
a first processing circuit for operating processing equivalent to a division of the accumulated value calculated in said first accumulation circuit by a number of pixels forming said module;
a second accumulation circuit comprising plural second memory circuits provided correspondingly to the respective plural modules, which writes an accumulated value of the inputted plural pixel values to said second memory circuit corresponding to the module in which the pixel value is included;
a second processing circuit for operating processing equivalent to a division of the accumulated value calculated in the second accumulation circuit by a number of pixels forming said module;
a second arithmetic circuit for squaring the processing result in the second processing circuit; and
a third arithmetic circuit for calculating a difference between the calculation result in said first arithmetic circuit and the calculation result in said second arithmetic circuit, to generate said root-mean-square value.

6. An image processing apparatus for calculating for respective plural modules when a frame image is processed by being divided into said plural modules, a root-mean-square value of a difference between respective plural pixel values for forming the module and a mean of said plural pixel values for forming the module, and said root-mean-square value being applied for determining complexity of the frame image formed by a first field image and a second field image, comprising:

a first arithmetic circuit for inputting in order plural pixel values forming said first field image and plural pixel values forming said second field image consecutively and squaring the inputted plural pixel values;
a first addition circuit for adding a first feedback value and the operation result in said first arithmetic circuit;
plural first memory circuits provided correspondingly to the respective said plural modules;
a first selection circuit for selecting said first memory circuit so that the addition result in said first addition circuit is written into the first memory circuit corresponding to the module applied for the addition in the first addition circuit;
a second selection circuit for selecting said first memory circuit so that said first feedback value is read out from the first memory circuit corresponding to the module applied for the addition in the first addition circuit;
a first processing circuit for operating processing equivalent to a division of the first feedback value by a number of the plural pixels forming said module, after the addition result in said first addition circuit is written into said first memory circuit for all pixel forming the module;
a second addition circuit for adding the inputted plural pixel values and a second feedback value;
plural second memory circuits provided correspondingly to the respective said plural modules;
a third selection circuit for selecting said second memory circuit so that the addition result in said second addition circuit is written into the second memory circuit corresponding to the module applied for the addition in the second addition circuit;
a fourth selection circuit for selecting said second memory circuit so that said second feedback value is read out from the second memory circuit corresponding to the module applied for the addition in the second addition circuit;
a second processing circuit for operating processing equivalent to a division of the second feedback value by a number of the plural pixels forming said module, after the addition result in said second addition circuit is written into said second memory circuit for all pixel forming the module;
a second arithmetic circuit for squaring the processing result in said second processing circuit; and
a third arithmetic circuit for calculating a difference between the calculation result in said first arithmetic circuit and the calculation result in said second arithmetic circuit, to generate said root-mean-square value.

7. An image processing method wherein an image processing apparatus calculates a root-mean-square value of a difference between respective plural pixel values for forming said image and a mean of said plural pixel values, and said root-mean-square value being applied for determining complexity of said image, and said image processing apparatus comprises:

a first step for calculating a mean of the sum of square of the plural pixel data inputted consecutively;
a second step for calculating a square of a mean of the plural pixel values inputted consecutively, simultaneously with said first step; and
a third step for calculating a difference between the calculation result in the first step and the calculation result in the second step, to generate said root-mean-square value.

**8.** An image processing method wherein an image processing apparatus, when a frame image is processed by being divided into plural modules, calculates for the respective plural modules, a root-mean-square value of a difference between respective plural pixel values for forming the module and a mean of said plural pixel values for forming the module, and said root-mean-square value being applied for determining complexity of the frame image formed by a first field image and a second field image, and said image processing apparatus comprises:

a first step for inputting in order plural pixel values forming said first field image and plural pixel values forming said second field image consecutively and squaring the inputted plural pixel values;
a second step for writing an accumulated value of the operation result in said first arithmetic circuit into, among plural first memory circuits, said first memory circuit corresponding to the module in which the pixel value applied for the operation in the first step is included;
a third step for operating processing equivalent to a division of the accumulated value calculated in said second step by a number of said plural pixels for forming said module;
a fourth step for writing an accumulated value of the inputted plural pixel values into, among plural second memory circuits, said second memory circuit corresponding to the module in which the pixel value is included;
a fifth step for operating processing equivalent to a division of the accumulated value calculated in the fourth step by a number of pixels for forming said module;
a sixth step for squaring the processing result in the fifth step; and
a seventh step for calculating a difference between the calculation result in the third step and the calculation result in the fifth step, to generate said root-mean-square value.

FIG. 1

Pk → 100 → 101 (+) → 102 REG → 103 1/64 → 104 REG → 106 (+/−) → 107 (×) → 108 (+) → 109 REG → 110 1/64 → 111 var_sblk

105 FIFO

121

FIG. 2

# FIG. 3

EP 1 365 596 A2

# FIG. 4

EP 1 365 596 A2

# FIG. 5

EP 1 365 596 A2

# FIG. 6

# FIG. 7

FIRST
FIELD

SECOND
FIELD

EP 1 365 596 A2